# EUROPÄISCHE PATENTSCHRIFT

(11) **EP 3 987 974 B1**
(45) Veröffentlichungstag und Bekanntmachung des Hinweises auf die Patenterteilung: **07.12.2022**
(21) Anmeldenummer: 20202941.9
(22) Anmeldetag: 21.10.2020
(51) Int. Cl.: A45D 40/16, B29C 33/50

(54) **VORRICHTUNG UND VERFAHREN ZUM FORMEN EINES MEHRSCHICHTIGEN KOSMETISCHEN PRODUKTES MITTELS EINES FLEXIBLEN KERNS**
DEVICE AND METHOD FOR FORMING A MULTILAYER COSMETIC PRODUCT USING A FLEXIBLE CORE
APPAREIL ET PROCÉDÉ DE FORMAGE D'UN PRODUIT COSMÉTIQUE MULTICOUCHE AU MOYEN D'UN NOYAU SOUPLE

(43) Veröffentlichungstag der Anmeldung: 27.04.2022
(60) Teilanmeldung: 22190587.0
(73) Patentinhaber: Weckerle GmbH, 82362 Weilheim (DE)
(72) Erfinder: Droste, Sven, 82380 Peißenberg (DE); Commes, Ann-Kristin, 82362 Weilheim (DE); Hell, Markus, 82436 Eglfing (DE); Rankl, Fabian, 86981 Kinsau (DE)
(74) Vertreter: Bardehle Pagenberg Partnerschaft mbB Patentanwälte Rechtsanwälte

(56) Entgegenhaltungen:
- EP-A1- 2 006 063
- EP-A1- 3 219 363
- WO-A1-2018/206883

## Beschreibung

Die vorliegende Erfindung betrifft im Allgemeinen eine Vorrichtung sowie ein Verfahren zum Formen eines kosmetischen Produktes, insbesondere eine Vorrichtung sowie ein Verfahren zum Formen einer Lippenstiftmine, aus zumindest zwei pastösen Massen.

Bei bekannten Verfahren zum Formen eines kosmetischen Produktes, insbesondere zum Formen einer Lippenstiftmine, werden zu formende pastöse Massen mit Hilfe einer Einfüllvorrichtung im heißen, flüssigen Zustand in eine Form eingefüllt. Die eingefüllte pastöse Masse kann anschließend in der Form abkühlen oder abgekühlt werden, um zu erstarren, so dass die pastöse Masse die innere Ausgestaltung der Form annimmt. Durch die innere Ausgestaltung der Form erreicht man also die gewünschte räumliche Gestaltung der pastösen Masse. Die erstarrte pastöse Masse kann dann beispielsweise mit Hilfe einer Entnahmevorrichtung aus der Form entnommen werden. Mittels dieser Technik können aber nur Lippenstiftminen mit einer Sorte an pastösen Massen hergestellt werden.

Im Stand der Technik sind aber auch Techniken bekannt, mit der Lippenstiftminen aus zwei oder mehr pastösen Massen hergestellt werden können. Diese aus mehreren pastösen Massen bestehenden Lippenstiftminen können auch als mehrschichtige Lippenstiftminen bezeichnet werden. Um diese zu erzeugen, wird zunächst ein Reduzierstück in die Form eingeführt. Dieses Reduzierstück verändert die innere Ausgestaltung der Form und bildet eine erste Kavität zwischen dem der äußeren Wand des Reduzierstücks und der inneren Wand der Form. Daher kann das Reduzierstück auch als Kern bezeichnet werden, der in die Form eingeführt wird. Die zwischen dem Kern und der inneren Wandung der Form entstehende erste Kavität kann dann mit einer ersten pastösen Masse gefüllt werden. Wenn diese erste pastöse Masse abgekühlt und erstarrt ist, so kann der Kern aus der Form herausbewegt werden. Der Kern hinterlässt dann eine zweite Kavität, in welche eine zweite pastöse Masse eingefüllt werden kann. Die zweite pastöse Masse kann dann in der zweiten Kavität abkühlen oder abgekühlt werden und erstarren. Hierdurch entsteht eine mehrschichtige Lippenstiftmine, die dadurch gekennzeichnet ist, dass die innenliegende zweite pastöse Masse von der außen liegenden ersten pastösen Masse umgeben bzw. ummantelt wird. Es kann auch gesagt werden, dass die zweite pastöse Masse die innenliegende pastöse Masse ist, wohingegen die erste pastöse Masse die außenliegende pastöse Masse ist. Verfahren und entsprechende Vorrichtungen zum Erzeugen derartiger mehrschichtiger Lippenstiftminen sind beispielsweise in DE 44 42 197 C1, US 4,291,018 und US 7,208,168 beschrieben. Insbesondere zeigt EP 2 006 063 A1 eine Formvorrichtung zum Formen von Massen aus zwei oder mehreren Komponenten, bei denen die geformte Masse aus mindestens einer der beiden Komponenten eine komplizierte Ausgestaltung oder Struktur aufweist. Hierzu nutzt die EP 2 006 063 A1 einen Kern, wobei die Außenfläche des Kerns das Gegenstück für die zu bildende Ausgestaltung einer ersten Komponente bildet.

Allerdings verwenden die im Stand der Technik beschriebenen Verfahren und Vorrichtungen teilstarre Kerne mit nur schwer veränderlichen Außengeometrien, mit einer sich zumeist in Richtung der Form verjüngenden Ausgestaltung. Dies hat den Nachteil, dass die außenliegende erste pastöse Masse und die innenliegende zweite pastöse Masse nicht jede beliebige Form annehmen können. Der Kern muss nämlich derart ausgestaltet sein, dass dieser beim Bewegen aus der Form heraus nicht die erste pastöse Masse beschädigt.

Mit den aus dem Stand der Technik bekannten Verfahren und Vorrichtungen können aus den oben genannten Gründen nur verhältnismäßig glatt abschließende Aufschichtungen von pastösen Massen hergestellt werden. Grundsätzlich besteht aber Bedarf nach Verfahren und Vorrichtungen, welche kompliziertere Ausgestaltungen der zweiten pastösen Masse erlauben, insbesondere der inneren pastösen Masse. Ein höherer Gestaltungsfreiraum bei der Herstellung von mehrkomponentigen Lippenstiftminen wäre wünschenswert. Insbesondere wäre es wünschenswert, Muster bzw. Hinterschneidungen innerhalb der pastösen Massen herzustellen. Bei solchen Mustern bzw. Hinterschneidungen bilden die pastösen Massen ineinandergreifende Strukturen, die nicht großflächig glatt und flächig miteinander abschließen. Zum Beispiel kann es erwünscht sein, dass die Unternehmensmarke oder ein Produktkennzeichen des herstellenden Unternehmens als ein Muster innerhalb einer oder mehrerer der pastösen Massen erscheint. Dies entspricht Gravuren, die auf der Oberfläche und/oder innerhalb der Lippenstiftmine liegen.

Diese Aufgabe wird mit der Vorrichtung und dem Verfahren der unabhängigen Ansprüche gelöst. Vorteilhafte Ausführungsformen sind in den abhängigen Ansprüchen erläutert.

Eine erfindungsgemäße Vorrichtung zum Formen eines kosmetischen Produkts, insbesondere einer Lippenstiftmine, bestehend aus zumindest zwei pastösen Massen, weist eine flexible Form und einen flexiblen Kern auf. Dabei ist der flexible Kern angepasst in die flexible Form bewegt zu werden und in einer ersten Position zumindest teilweise in der flexiblen Form angeordnet zu sein und in einer zweiten Position außerhalb der flexiblen Form angeordnet zu sein. In der ersten Position, in der der flexible Kern zumindest teilweise innerhalb der flexiblen Form angeordnet ist, bildet der flexible Kern zusammen mit der flexiblen Form eine erste Kavität. Dabei wird die erste Kavität zwischen der inneren Wandung der flexiblen Form und der äußeren Wandung des flexiblen Kerns gebildet. Es kann auch gesagt werden, dass die erste Kavität zwischen den sich zugewandten Wandungen des flexiblen Kerns und der flexiblen Form gebildet werden. Die erste Position kann das tiefste Eintauchen des flexiblen Kerns in die flexible Formrepräsentieren. In die zwischen dem flexiblen Kern und der flexiblen Form gebildete erste Kavität kann eine erste pastöse Masse eingefüllt werden. Nach dem zumindest teilweisen Erstarren der ersten pastösen Masse in der ersten Kavität, wird der flexible Kern in die zweite Position bewegt. Die zweite Position kann den Zustand kennzeichnen, in dem der flexible Kern vollständig aus der flexiblen Form entfernt ist. Dieses Bewegen des flexiblen Kerns in die zweite Position kann durch ein Einstellen des Entformwinkels prozesstechnisch optimiert werden. Dies bedeutet, dass der Winkel, unter dem der flexible Kern aus der flexiblen Form herausgezogen wird, derart optimiert wird, dass der flexible Kern die erste pastöse Masse möglichst wenig beschädigt. Beispielsweise kann der Entformwinkel so gewählt werden, dass dieser von dem Muster weg zeigt, d.h. nur die glatte Fläche des flexiblen Kerns beim Entformen die erste pastöse Masse berührt, wohingegen die Fläche mit dem gestalterischen Muster, die erste pastöse Masse nicht mehr berührt. Wenn der flexible Kern aus der ersten pastösen Masse bewegt wird, so gibt dieser eine zweite Kavität frei, die von der Ausgestaltung her der äußeren Ausgestaltung des flexiblen Kerns entspricht. Beispielsweise kann durch eine Gestaltung der Oberfläche des verwendeten flexiblen Kerns eine gewünschte Oberflächentextur des Lippenstiftmaterials erreicht werden. Beispielsweise erzeugt eine amorphe Kernoberfläche automatisch ein mattes Erscheinungsbild der Lippenstiftoberfläche bzw. derjenigen Fläche des Lippenstiftes, die bei der Herstellung mit der Kernoberfläche in Kontakt war. Es sind aber beliebige Muster, Formen, Logos usw. denkbar, die auf der Oberfläche des flexiblen Kerns angeordnet werden können und dessen Negativ sich dann in der ersten pastösen Masse widerspiegelt. Dadurch dass der Kern flexibel ausgestaltet ist, kann sich dieser verformen, wenn er in die zweite Position bewegt wird, so dass der flexible Kern die erste pastöse Masse nicht beschädigt. Dieses Verformen kann eigenständig oder unterstützt geschehen. In Fall der eigenständigen Verformung, ist der flexible Kern derart ausgestaltet, dass dieser weicher ist als die erste pastöse Masse. In diesem Fall wird die Verformung also dadurch bewerkstelligt, dass der flexible Kern entlang der ersten pastösen Masse entlangrutscht und zusammengedrückt wird, wenn der flexible Kern in die zweite Position bewegt wird, ohne dass dabei die erste pastöse Masse beschädigt wird. Diese eigenständige Verformung kann auch als passiv elastische Verformung bezeichnet werden, die durch äußere Kräfte hervorgerufen wird. Ist der flexible Kern relativ zur ersten pastösen Masse härter ausgestaltet, so kann eine unterstützte Verformung nötig sein. Hierbei kann ein Mittel dafür sorgen, dass sich die äußere Form des flexiblen Kerns ändert. Diese Änderung kann vor und/oder während des Bewegens in die zweite Position geschehen. Die Änderung kann beispielsweise in dem Zusammenziehen des flexiblen Kerns gegeben sein.

Mit der erfindungsgemäßen Vorrichtung ist es erstmalig möglich, Lippenstiftminen mit komplexen Mustern, Hinterschneidungen und Logos aus mindestens zwei pastösen Massen herzustellen.

Dem Fachmann ist bewusst, dass auch wenn die hier beschriebene Vorrichtung nur einen flexiblen Kern beinhaltet, die Vorrichtung im Prinzip auch mehrere verschiedene flexible Kerne aufweisen kann. In einem solchen Fall, können die flexiblen Kerne verschiedene Durchmesser aufweisen, so dass der erste flexible Kern am größten und der letzte flexible Kern am kleinsten ist. Die zwischen aufeinanderfolgenden Kernen liegenden Hohlräume bilden dann zusätzliche Kavitäten, die mit zusätzlichen pastösen Massen befüllt werden können. So können Lippenstiftminen erzeugt werden, die Hinterschneidungen aufweisen und aus mehr als zwei pastösen Massen bestehen.

In einer bevorzugten Ausführungsform der erfindungsgemäßen Vorrichtung können sich die zwei verwendeten pastösen Massen in der Art der chemischen Zusammensetzung, der Farbe, der Transparenz, der Viskosität, des Geruchs oder anderer Eigenschaften unterscheiden. Die beiden pastösen Massen können sich in allen Eigenschaften oder auch nur einer Eigenschaft unterscheiden. Beispielsweise kann die erste pastöse Masse transparent sein. Hierdurch wird eine Durchsicht auf die zweite pastöse Masse innerhalb der Lippenstiftmine ermöglicht. Insbesondere wird so ein auf die zweite pastöse Masse auf- bzw. eingeprägtes Muster von außen sichtbar. Die pastösen Massen können aus Wachs, oder einer Mischung verschiedener Wachse bestehen. Insbesondere können sich die Zusammensetzungen aus Wachsen für die erste und zweite pastöse Masse derart unterscheiden, dass die erste pastöse Masse eine höhere Schmelztemperatur, z.B. 20° C bis 30° C höher, als die zweite pastöse Masse aufweist. Hierdurch kann vermieden werden, dass die erste pastöse Masse im abgekühlten erstarrten Zustand wieder anschmilzt, falls sie mit der zweiten pastösen Masse im erwärmten flüssigen Zustand in Kontakt kommt.

Gemäß der vorliegenden Erfindung ist der flexible Kern innen hohl. Hohl bedeutet in diesem Fall, dass der flexible Kern eine Aushöhlung aufweist, die ein Innenvolumen darstellt, welches mit einem Gas oder Luft gefüllt werden kann. Der hohle flexible Kern lässt sich leichter verformen im Vergleich zu einem massiven, starren Kern. Die Verformung des flexiblen Kerns kann passiv oder aktiv erfolgen. Bei einer passiven Verformung des flexiblen Kerns erfolgt eine Formänderung des flexiblen Kerns durch mechanische äußere Einwirkung während einer Bewegung des flexiblen Kerns. Bei einer aktiven Verformung des flexiblen Kerns erfolgt die Formänderung des flexiblen Kerns durch aktive Mittel, die die Verformung bewirken. Die aktive Verformung kann beispielsweise dadurch bewerkstelligt werden, dass der hohle flexible Kern mit einer Druckänderung beaufschlagt wird. Beispielsweise kann der hohle flexible Kern in der ersten Position mit einem Druck beaufschlagt werden, um dem flexiblen Kern eine gewisse Stabilität zu verleihen. Bevor oder beim Bewegen in die zweite Position kann der Druck wieder abgelassen werden, so dass sich der flexible Kern verformen kann. Um die Verformung noch zu unterstützen, kann auch ein negativer Druck angelegt werden, so dass sich der hohle flexible Kern zusammenzieht und dadurch die Verformung bewirkt wird. Die Druckbeaufschlagung kann durch eine Öffnung des Innenvolumens des hohlen flexiblen Kerns bewerkstelligt werden. Durch die Öffnung kann Gas oder Luft in das Innenvolumen des flexiblen Kerns eingeleitet werden. Das Innenvolumen des flexiblen Kerns kann sich auf Umgebungsdruck oder Über- und Unterdruck, relativ zum Umgebungsdruck, befinden. Durch die Druckdifferenz zwischen Druck im Innenvolumen des flexiblen Kerns und Umgebungsdruck werden Kräfte auf den flexiblen Kern ausgeübt, welche zu einer Ausdehnung oder zu einem Zusammenziehen des flexiblen Kerns führen. Bei der Beaufschlagung des hohlen flexiblen mit Druck bzw. negativem Druck wird also ausgenutzt, dass sich der flexible Kern ausdehnt bzw. zusammenzieht. Hierbei wird Ausdehnen und Zusammenziehen in dem Sinne verwendet, dass der Außendurchmesser des flexiblen Kerns, also der Durchmesser gemessen an der der Form zugewandten Seite, im ausgedehnten Zustand größer ist als im zusammengezogenen Zustand. Ist der Druck im Innenraum des flexiblen Kerns gleich dem Umgebungsdruck, so kommt der Durchmesser des flexiblen Kerns zwischen dem Durchmesser im ausgedehnten Zustand und dem Durchmesser im zusammengezogenen Zustand zu liegen. Ein solches Expansionsverhalten des Materials des flexiblen Kerns stellt sicher, dass zum Zurückziehen des flexiblen Kerns, also der Bewegung des flexiblen Kerns in die zweite Position, dieser im Prinzip in seiner Größe verkleinert werden kann, was das Zurückziehen wesentlich erleichtert, da die Größe des flexiblen Kerns vor dem Zurückziehen größer ist als zum Zeitpunkt des Zurückziehens. Eine verkleinerte Größe des flexiblen Kerns beim Zurückziehen ermöglicht zudem ein Zurückziehen des flexiblen Kerns ohne Beschädigung der ersten pastösen Masse. Vorteilhafterweise ist das Material des flexiblen Kerns derart gestaltet, dass sich bei gleichem Innendruck und gleichem Umgebungsdruck stets dieselbe Volumenform des flexiblen Kerns einstellt. Dies gewährleistet eine reproduktive Wiederverwendung des flexiblen Kerns und damit eine konsekutive Herstellung gleicher Lippenstiftminen mit demselben flexiblen Kern.

Gemäß der vorliegenden Erfindung aufweist die Vorrichtung einen starren Dorn, der angepasst ist, zumindest teilweise in den hohlen flexiblen Kern bewegt zu werden. Die Geometrie des Inneren des hohlen flexiblen Kerns entspricht dabei im Wesentlichen der des starren Dorns. Es kann auch gesagt werden, das Innere des hohlen flexiblen Kerns ist komplementär zum starren Dorn ausgestattet, um diesen zumindest teilweise aufzunehmen. Das Bewegen in den flexiblen Kern kann geschehen bevor oder während der flexible Kern in der ersten Position ist. Der starre Dorn kann für eine Stabilisierung des flexiblen Kerns sorgen, so dass dieser sich beim Einfüllen der ersten pastösen Masse nicht zu stark bewegt, um eine definierte erste Kavität zu erzeugen. Sobald die erste pastöse Masse in die erste Kavität zwischen flexibler Form und flexiblem Kern eingefüllt worden ist, und in der ersten Kavität erstarrt ist kann der starre Dorn zurückgezogen werden, so dass der flexible Kern anschließend ohne die erste pastöse Masse zu beschädigen in die zweite Position bewegt werden kann. Der starre Dorn kann auf Grund seiner Funktion den flexiblen Kern zumindest zeitweise zu stützen auch als Stützdorn bezeichnet werden. Der Außendurchmesser des starren Dorns kann den Innendurchmesser des hohlen flexiblen Kerns geringfügig unterschreiten. Beispielsweise kann sich zwischen dem flexiblen Kern und dem Stützdorn ein Ringspalt befinden. Es kann also gesagt werden, dass es einen Abstand zwischen der inneren Wandung des flexiblen Kerns, also der Wandung, die dem starren Dorn zugewandt ist, und der äußeren Oberfläche des starren Dorns, also der Oberfläche, die dem flexiblen Kern zugewandt ist, gibt. Dieser Abstand oder Ringspalt kann rotationssymmetrisch ausgestaltet sein. Der Ringspalt kann beispielsweise eine Breite von etwa 0,1 mm aufweisen. Durch den Ringspalt kann sich der starre Dorn leichter relativ zum flexiblen Kern bewegen, also in diesen hinein und hinaus bewegt werden. Wird die flexible Form mitsamt dem über den Stützdorn gezogenen flexiblen Kern gekühlt, ziehen sich die Inhaltsstoffe der ersten pastöse Masse zusammen und der flexible Kern zieht sich zum starren Dorn. Hierdurch wird der flexible Kern von der ersten pastösen Masse abgelöst und kann anschließend in die zweite Position bewegt werden, ohne die abgekühlte erste pastöse Masse zu beschädigen. Der Ringspalt erleichtert also ein zerstörungsfreies Rückziehen des flexiblen Kerns in die zweite Position. Zusätzlich zum Stützdorn kann auch die bereits oben beschriebene Beaufschlagung mit Druckänderung geschehen.

In einer weiteren bevorzugten Ausführungsform der erfindungsgemäßen Vorrichtung kann der flexible Kern ein Muster auf seiner Außenwand aufweisen, also an der Wand, die der Form zugewandt ist. Das Muster kann dabei durch zumindest eine Vertiefung in dem flexiblen Kern und/oder durch zumindest einen Vorsprung gebildet werden. Hierdurch entsteht nach Einfüllen der ersten pastösen Masse ein Vorsprung und/oder eine Vertiefung in der ersten pastösen Masse. Mit anderen Worten, das Muster auf der Außenwand des flexiblen Kerns wirkt als ein Negativrelief für ein in die erste pastöse Masse eingeprägtes positives Relief. Nach Einfüllen der zweiten pastösen Masse entsteht auf der Oberfläche der zweiten pastösen Masse genau dasselbe Muster wie auf dem flexiblen Kern, da die zweite pastöse Masse nun dasselbe Volumen ausfüllt wie der in die flexible Form eingeführte flexible Kern.

In einer weiteren bevorzugten Ausführungsform der erfindungsgemäßen Vorrichtung kann der flexible Kern in der ersten Position zumindest an einer Stelle die flexible Form berühren. Dies ist zweckmäßig, wenn die zweite pastöse Masse an der zumindest einen Stelle bis an die Oberfläche der Lippenstiftmine reichen soll. Zudem ist ein Berühren der flexiblen Form durch den flexiblen Kern zweckmäßig zur Abstützung oder zum genauen, reproduktiven Positionieren des flexiblen Kerns relativ zu der flexiblen Form. Beispielsweise kann die flexible Form Mittel zum Positionieren des flexiblen Kerns aufweisen. Dieses Mittel zum Positionieren des flexiblen Kerns kann beispielsweise als eine Ausstülpung des Bodens der flexiblen Form in Richtung des Innenraums der flexiblen Form gestaltet sein. Die Ausstülpung kann derart gestaltet sein, dass sie passgenau die untere Spitze des flexiblen Kerns aufnimmt. Beispielsweise kann hierfür die Ausstülpung eine Ringform aufweisen, bei der der Innendurchmesser der Ringform im Wesentlichen dem Außendurchmesser der unteren Spitze des flexiblen Kerns entspricht. Der hier als Spitze bezeichnete Teil des flexiblen Kerns ist der untere Teil des flexiblen Kerns, der der flexiblen Form in der ersten Position zugewandt ist und/oder die flexible Form berührt.

In einer weiteren bevorzugten Ausführungsform der erfindungsgemäßen Vorrichtung kann der flexible Kern aus einem Elastomer geformt sein. Es werden Materialien von den Elastomergruppen LSR, RTV und HTV verwendet. Die Formen/Kerne haben eine Shorehärte im Bereich von ca. 20 - 40 Shore A.

In einer weiteren bevorzugten Ausführungsform der erfindungsgemäßen Vorrichtung kann der flexible Kern auf seiner Oberfläche eine Beschichtung aufweisen. Die Oberfläche des flexiblen Kerns bezeichnet dabei die Fläche des flexiblen Kerns, die der flexiblen Form zugewandt ist. Die Beschichtung kann derart gestaltet sein, dass diese ein Ablösen der ersten pastösen Masse bei Herausziehen des flexiblen Kerns aus der flexiblen Form erleichtert. Insbesondere kann die Beschichtung flexibel sein, d.h. sie löst sich bei Formänderungen des flexiblen Kerns nicht von der Oberfläche des flexiblen Kerns ab. Die Beschichtung kann auch den Reibungskoeffizienten zwischen der ersten pastösen Masse und dem flexiblen Kern verringern, so dass dieser einfach aus der ersten pastösen Masse hinaus in die zweite Position bewegt werden kann. Auf den Einsatz von Beschichtungen bzw. Formtrennmitteln, die ein Ablösen des flexiblen Kerns von dem pastösen Material erleichtern, kann aber auch verzichtet werden. Dies ist vorteilhaft bei der Produktion von Naturkosmetika, für die die gängigen Formtrennmittel nicht zulässig sind.

In einer weiteren bevorzugten Ausführungsform der erfindungsgemäßen Vorrichtung kann die Vorrichtung ein Mittel zum Bewegen des flexiblen Kerns in die erste und zweite Position aufweisen. Die erste Position beschreibt den Zustand des in die flexible Form hineinbewegten flexiblen Kerns, wohingegen die zweite Position den Zustand des aus der flexiblen Form herausbewegten flexiblen Kerns beschreibt. Dabei kann der herausbewegte Zustand des flexiblen Kerns dadurch gekennzeichnet sein, dass es zu keinerlei Kontakt des flexiblen Kerns mit den pastösen Massen oder der flexiblen Form kommt.

In einer weiteren bevorzugten Ausführungsform der erfindungsgemäßen Vorrichtung kann die Vorrichtung ein Mittel zum Einfüllen der ersten pastösen Masse in die erste Kavität aufweisen, wobei die erste Kavität zwischen der flexiblen Form und dem flexiblen Kern gebildet wird, wenn der flexible Kern in der ersten Position ist. Das Mittel zum Einfüllen der ersten pastösen Masse kann eine nadelähnliche Spitze aufweisen, die eine Öffnung enthält, durch die die erste pastöse Masse austritt.

In einer weiteren bevorzugten Ausführungsform der erfindungsgemäßen Vorrichtung kann die Vorrichtung ein Mittel zum Einfüllen der zweiten pastösen Masse in die zweite Kavität auf, wobei die zweite Kavität in der ersten pastösen Masse gebildet ist, wenn der flexible Kern in der zweiten Position ist. Das Mittel zum Einfüllen der zweiten pastösen Masse kann eine nadelähnliche Spitze aufweisen, die eine Öffnung enthält, durch die die zweite pastöse Masse austritt. Das Mittel zum Einfüllen der zweiten pastösen Masse kann das gleiche Mittel wie zum Einfüllen der ersten pastösen Masse sein. Falls zum Einfüllen der pastösen Massen dasselbe Mittel zum Einfüllen verwendet wird, ist es denkbar, dass eine Einfüllspitze zwei Kanäle mit zwei benachbarten Öffnungen aufweist. Dies hat den Vorteil, dass Einfüllkanäle voneinander unabhängig sind und z.B. nicht gereinigt werden müssen, wenn die jeweils andere pastöse Masse eingefüllt werden soll. Es ist aber auch möglich, dass zwei verschiedene, möglicherweise baugleiche, Mittel zum Einfüllen der zwei pastösen Massen verwendet werden. Insbesondere ist es möglich, dass der flexible Kern selbst das Mittel zum Einfüllen der zweiten pastösen Masse darstellt. Hierfür kann sich an der Spitze des flexiblen Kerns eine Öffnung befinden, aus der beim Zurückziehen des flexiblen Kerns die zweite pastöse Masse in die zweite Kavität hinaus austritt.

In einer weiteren bevorzugten Ausführungsform der erfindungsgemäßen Vorrichtung kann die Vorrichtung ein Mittel zum Entformen der pastösen Massen aufweisen. Sobald der Verbund aus erster und zweiter pastöser Masse erstarrt ist, kann der Verbund aus der flexiblen Form entnommen werden. Hierfür ist ein Greifmechanismus nötig, der den Verbund aus erster und zweiter pastöser Masse möglichst zerstörungsfrei greifen kann. Hierzu ist es möglich, dass der Verbund aus erster und zweiter pastöser Masse mit einer glockenförmigen Saugvorrichtung gefasst und dann nach oben gezogen wird. Hierbei bleibt die flexible Form leer zurück. Zudem ist es möglich, dass der Verbund aus erster und zweiter pastöser Masse mittels einer konventionellen Entnahmemethode aus der flexiblen Form entnommen wird. Insbesondere kann die konventionelle Entnahmemethode eine Körbchen-Entnahme beinhalten, bei der die erstarrte pastöse Masse mittels eines, hinsichtlich der erstarrten pastösen Masse passgenauen, Körbchens gegriffen wird, welches bei der späteren Lippenstiftherstellung direkt in einen neu hergestellten Lippenstift eingefügt wird. Beispielsweise kann das Körbchen aus Kunststoff gefertigt sein.

In einer weiteren bevorzugten Ausführungsform der erfindungsgemäßen Vorrichtung kann die Vorrichtung eine Grundplatte mit geometrischen Merkmalen aufweisen, die eine Zentrierung und Fixierung des flexiblen Kerns ermöglichen. Für eine reproduzierbare Produktion gleichartiger Lippenstiftminen ist es notwendig, dass der flexible Kern stets wieder in dieselbe Relativposition gegenüber der flexiblen Form gebracht wird. Zwar kann im Prinzip die flexible Form arretiert werden und das Mittel zum Bewegen des flexiblen Kerns kann über Schrittmotoren millimetergenau positioniert werden. Allerdings muss die einmal angewählte Position auch während des Befüll-Prozesses mit der ersten pastösen Masse stabil sein. Hierfür ist es nützlich, die flexible Form mit einer Grundplatte zu versehen, die exakt an der gewünschten Position des flexiblen Kerns geometrische Merkmale, z.B. passgenaue Öffnungen von der Größe des Außendurchmessers des flexiblen Kerns, aufweist. Durch eine solche Grundplatte wird der flexible Kern in der ersten Position arretiert. Nach Befüllen der ersten Kavität und Zurückziehen des flexiblen Kerns kann dann auch die Grundplatte von der flexiblen Form entfernt werden bzw. es ist möglich, dass die zweite Kavität durch die für den flexiblen Kern vorgesehenen Öffnungen mit der zweiten pastösen Masse befüllt wird.

In einer weiteren bevorzugten Ausführungsform der erfindungsgemäßen Vorrichtung kann die Vorrichtung weiter ein Reduzierstück aufweisen. Das Reduzierstück kann von oben zumindest teilweise in die flexible Form eingeführt werden. Das Reduzierstück kann dabei zumindest teilweise die Innenseite der flexiblen Form kontaktieren. Dies hat den Vorteil, dass keine pastöse Masse entlang der Kontaktfläche zwischen flexibler Form und Reduzierstück eindringen kann, selbst wenn die Oberfläche der pastösen Masse nach dem Befüllen von flexibler Form und Reduzierstück oberhalb der Kontaktfläche liegt. Insbesondere ist es möglich, dass das Reduzierstück bis etwa zur Hälfte mit pastöser Masse aufgefüllt wird. Das Reduzierstück kann die flexible Form verjüngen, d.h. der Innendurchmesser der flexiblen Form kann bei aufgesetztem Reduzierstück geringer sein als ohne Reduzierstück. Das Reduzierstück kann mit derselben räumlichen Symmetrie wie die flexible Form ausgestaltet sein. Ist z.B. die flexible Form rotations-symmetrisch um eine vertikale Achse, so kann auch das Reduzierstück um diese vertikale Achse rotationssymmetrisch sein. Das Reduzierstück definiert durch die von ihm eingenommenen Volumina eine Aussparung in dem Raumvolumen, das von der ersten pastösen Masse innerhalb der flexiblen Form eingenommen werden kann. Dies Aussparung kann nützlich sein, um die Lippenstiftmine in ein Körbchen einer bekannten Lippenstiftmechanik einzusetzen ohne dass es einen Versprung zwischen der erstarrten pastösen Masse und dem Körbchen gibt. Auch hat die Aussparung den Vorteil, dass beim aufsetzen des Körbchens kein Material der ersten pastösen Masse verdrängt werden müsste, was zu Verschmutzungen führen könnte

Die obige Aufgabe wird auch durch ein Verfahren zum Formen eines kosmetischen Produkts, insbesondere einer Lippenstiftmine, bestehend aus zumindest zwei pastösen Massen, gelöst. Hierbei weist das Verfahren auf Bewegen eines flexiblen Kerns in eine erste Position, wobei der flexible Kern in der ersten Position zumindest teilweise in einer flexiblen Form angeordnet ist und ein starrer Dorn zumindest teilweise in dem flexiblen Kern angeordnet ist, Einfüllen einer ersten pastösen Masse in eine erste Kavität, wobei die erste Kavität zwischen der flexiblen Form und dem flexiblen Kern gebildet wird, Bewegen des flexiblen Kerns in eine zweite Position, wobei der flexible Kern in der zweiten Position außerhalb der flexiblen Form angeordnet ist, Einfüllen einer zweiten pastösen Masse in eine zweite Kavität, wobei die zweite Kavität in der ersten pastösen Masse gebildet ist, wenn der flexible Kern in die zweite Position bewegt ist und Entformen der pastösen Massen. Das Bewegen des flexiblen Kerns in die erste Position, kann derart durchgeführt werden, dass sich entweder der flexible Kern in Richtung der flexiblen Form oder die flexible Form in Richtung des flexiblen Kerns bewegt. Es ist auch denkbar, dass sich die flexible Form und der flexible Kern gleichzeitig aufeinander zu bewegen. Das Einfüllen einer ersten pastösen Masse in die erste Kavität, kann beispielweise derart erfolgen, dass eine vorher definierte Menge an heißer, flüssiger erster pastöser Masse in die Kavität gefüllt wird. Es ist aber auch denkbar, dass die Menge an erster pastöser Masse während des Einfüllens bestimmt wird, z.B. durch Unterbrechen eines Massenstroms von eingefüllter erster pastöser Masse, sobald diese einen vorbestimmten Grenzwert überschreitet. Das Messen des Massenstroms der ersten pastösen Masse kann durch einen Durchflusszähler erfolgen, der die Menge an bereits verfüllter erster pastöser Masse angibt. Es kann dann auch gesagt werden, die erste pastöse Masse wird dosiert. Das Bewegen des flexiblen Kerns in die zweite Position, kann derart erfolgen, dass die beim Bewegen des flexiblen Kerns in die erste Position durchgeführte Bewegung in genau entgegengesetzter Richtung durchlaufen wird. Es ist aber auch möglich, dass das Bewegen des flexiblen Kerns in die zweite Position die Bewegung des flexiblen Kerns in eine Parkposition, außerhalb der flexiblen Form aufweist. Wie bei der Bewegung des flexiblen Kerns in die erste Position, ist es möglich, dass sich der flexible Kern allein, die flexible Form allein oder beide gleichzeitig bewegen. Zudem ist es denkbar, dass das Bewegen des flexiblen Kerns in eine zweite Position zunächst mit sehr geringer Beschleunigung stattfindet, um die erstarrte erste pastöse Masse beim Zurückziehen des flexiblen Kerns nicht zu beschädigen. Insbesondere ist es denkbar, dass das Bewegen des flexiblen Kerns in die zweite Position unterbrochen wird, sobald eine zu große Kraft zu überwinden ist. Eine solche Situation kann eintreten, falls der flexible Kern mit der ersten pastösen Masse verklebt oder verkantet. In diesem Falle ist es möglich, dass der flexible Kern vor dem Bewegen in die zweite Position zunächst um seine Längsachse gedreht wird, um ihn von der erstarrten ersten pastösen Masse zu lösen. Das Einfüllen der zweiten pastösen Masse in die zweite Kavität, kann ebenfalls durch eine Gießfüllung geschehen. Es ist zudem möglich, dass ein zweites Mittel zum Einfüllen in die zweite Kavität eingeführt wird. Dem Fachmann sind vielerlei Möglichkeiten von Gießmechanismen bekannt.

In einer bevorzugten Ausführungsform des erfindungsgemäßen Verfahrens kann das Verfahren weiter aufweisen, Beaufschlagen des flexiblen Kerns mit Druck vor dem Einfüllen der ersten pastösen Masse und Beaufschlagen des flexiblen Kerns mit negativem Druck, also Vakuum, vor dem Bewegen in die zweite Position. Durch Beaufschlagen des flexiblen Kerns mit Druck kann dieser sich ausdehnen, wohingegen der flexible Kern sich bei Beaufschlagung mit einem negativen Druck zusammenzieht. Vor dem Einfüllen der ersten pastösen Masse kann der flexible Kern also derart expandiert werden, dass sein Volumen der gewünschten Form der ersten und zweiten Kavität entspricht. Nach Einfüllen der ersten pastösen Masse in die erste Kavität kann der flexible Kern derart zusammengezogen werden, dass er ein kleineres Volumen als die zweite Kavität aufweist und sich daher leicht von der erstarrten erste pastösen Masse löst und ohne Zerstörung der ersten pastösen Masse aus der flexiblen Form herausbewegen lässt.

In einer bevorzugten Ausführungsform des erfindungsgemäßen Verfahrens kann das Verfahren weiter aufweisen, zumindest teilweises Einführen eines Reduzierstücks in die flexible Form vor dem Einfüllen der ersten pastösen Masse. Des Weiteren kann das Verfahren aufweisen, vor dem Entformen der erstarrten pastösen Massen, Entnahme des Reduzierstücks aus der flexiblen Form. Das Reduzierstück kann auch bereits nach dem Erstarren der ersten pastösen Masse, also vor dem Einfüllen der zweiten pastösen Masse entnommen werden.

Die Erfindung wird nun anhand der beigefügten Zeichnungen näher erläutert. Hieraus ergeben sich weitere Einzelheiten und Merkmale des Gegenstandes der Erfindung. Es zeigen:
- Fig. 1A: einen vertikalen Schnitt durch eine erfindungsgemäße Vorrichtung mit einer flexiblen Form und einem flexiblen Kern, welcher sich in einer ersten Position befindet;
- Fig. 1B: einen vertikalen Schnitt durch eine erfindungsgemäße Vorrichtung mit einer flexiblen Form und einem flexiblen Kern, welcher sich in einer ersten Position befindet zusammen mit einem Stützdorn;
- Fig. 2A: die in Fig. 1A gezeigte Vorrichtung nach Einfüllen der ersten pastösen Masse;
- Fig. 2B: die in Fig. 1B gezeigte Vorrichtung nach Einfüllen der ersten pastösen Masse;
- Fig. 3A: die in Fig. 2A gezeigte Vorrichtung nach Bewegen des flexiblen Kerns in eine zweite Position;
- Fig. 3B: die in Fig. 2B gezeigte Vorrichtung nach Bewegen des flexiblen Kerns in eine zweite Position;
- Fig. 4: die in Fig. 3A/B gezeigte Vorrichtung nach Einfüllen der zweiten pastösen Masse;
- Fig. 5: die in Fig. 4 gezeigte Vorrichtung nach Entformen der pastösen Massen;
- Fig. 6: die in Fig. 1 gezeigte Vorrichtung mit aufgesetztem Reduzierstück;
- Fig. 7: die entformten pastösen Massen nach Entformung aus einer erfindungsgemäßen Vorrichtung ohne Reduzierstück (Figur 7A) und mit Reduzierstück (Figur 7B).

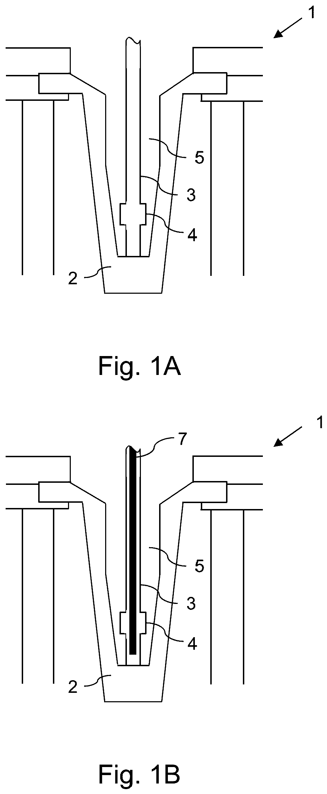

Figur 1A zeigt schematisch einen vertikalen Schnitt durch ein Ausführungsbeispiel einer erfindungsgemäßen Vorrichtung 1 mit einer flexiblen Form 2 und einem flexiblen Kern 3, welcher sich in einer ersten Position befindet. Die flexible Form 1 bildet im Zusammenspiel mit dem flexiblen Kern 3 eine erste Kavität 5, die durch den Zwischenraum zwischen flexibler Form 2 und flexiblem Kern 3 definiert wird. Die flexible Form 2 kann aus einem Elastomer hergestellt sein. Es ist denkbar, dass die flexible Form 2 vor dem Befüllen der ersten Kavität 5 vorgeheizt wird. Hierdurch wird ein optimales Hineinfließen der ersten pastösen Masse in die erste Kavität 5 gewährleistet. Zum Beispiel kann die flexible Form 2 auf 30°C bis 60°C vorgeheizt werden. Der flexible Kern 3 kann aus einem Elastomer hergestellt werden und kann hohl sein. Der flexible Kern 3 kann ein auf seiner Oberfläche aufgebrachtes Muster 4 aufweisen. Dieses Muster 4 kann durch eine Vertiefung (nicht gezeigt) oder durch einen Vorsprung, wie in Figur 1 gezeigt, gebildet werden. Insbesondere kann der flexible Kern 3 in Kontakt mit der flexiblen Form 2 kommen. In der vorliegenden Abbildung findet dieser Kontakt am Fuß der flexiblen Form 2 statt.

Figur 1B zeigt einen Stützdorn 7, über den der flexible Kern 3 geschoben ist. Man kann auch sagen, der flexible Kern 3 bildet eine Hülle für den Stützdorn 7. Hierzu kann der flexible Kern 3 innen hohl sein, so dass dieser den Stützdorn 7 aufnehmen kann. Der Stützdorn 7 sorgt für die Stabilität des flexiblen Kerns 3, wenn die erste pastöse Masse eingefüllt wird und hält den flexiblen Kern 3 in der ersten Position.

Wenn der Stützdorn 7 eingesetzt wird, so ist dieser bevorzugt aus einem Material hergestellt, welches fester ist als der flexible Kern 3, um so die genügende konstruktive Stabilität bereitstellen zu können.

Die konstruktive Stabilität des flexiblen Kerns 3 kann durch die Auswahl des Materials des flexiblen Kerns 3 selbst, durch die Verwendung eines zusätzlichen Stützdorns 7 und/oder durch die Beaufschlagung des flexiblen Kerns 3 mit einem Druck geschehen. Im letzteren Fall kann beispielsweise der flexible Kern 3 innen hohl sein und in dem durch den Hohlraum definierte Volumen kann ein Druck erzeugt werden, entweder durch einfüllen eines Gases oder einer Flüssigkeit, die dem flexiblen Kern 3 eine gewisse Stabilität verleiht. Dieser Druck kann dann auch dafür sorgen, dass die einzufüllende erste pastöse Masse a den flexiblen Kern 3 nicht verformt. Der Innendruck wirkt also dem Außendruck entgegen. Dabei kann dieser Druck sowohl in dem in Figur 1A gezeigten flexiblen Kern 3 als auch in dem in Figur 1B gezeigten flexiblen Kern 3 erzeugt werden. Im letzteren Fall kann der Druck in dem Volumen zwischen der Innenwand des flexiblen Kerns 3 und dem Stützdorn 7 erzeugt werden.

Die pastösen Massen a, b werden vor dem Einfüllen in flüssigen Zustand gebracht.

Hierfür müssen die pastösen Massen a, b auf eine Temperatur gebracht werden, die sämtliche Komponentenverbindungen der pastösen Massen a, b zum Schmelzen bringt, um ein klumpfreies Fließen und Erstarren der pastösen Massen a, b zu erlauben. Typischerweise beträgt die Heiztemperatur der pastösen Massen 70°C bis 80°C, da es sich bei den pastösen Massen vielfach um wachsähnliche Verbindungen handelt.

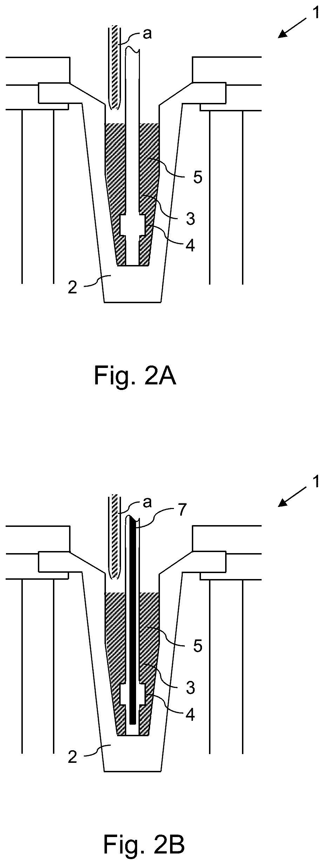

In Figur 2A ist die Vorrichtung 1 nach Einfüllen der ersten pastösen Masse a in die erste Kavität 5 gezeigt. Hierbei wird die erste Kavität 5 vollständig von der ersten pastösen Masse a ausgefüllt. Um eine gleichmäßige Verteilung der ersten pastösen Masse a in der ersten Kavität 5 zu gewährleisten, ist es denkbar, dass das Mittel zum Einfüllen so gestaltet ist, dass die Einfüllspitze der ersten pastösen Masse a während des Einfüllens um die vertikale Symmetrieachse des flexiblen Kerns 3 rotiert. Nach Einfüllen der ersten pastösen Masse a ist das Muster 4 spiegelbildlich zu seiner Ausprägung an dem flexiblen Kern 3 in die erste pastöse Masse a eingeprägt. Die konstruktive Stabilität des flexiblen Kerns 3 in Figur 2A ist beispielsweise dadurch gegeben, dass der flexible Kern 3 mit einem Druck beaufschlagt wird, oder durch die Materialwahl des flexiblen Kerns 3.

Figur 2B zeigt ebenfalls die Vorrichtung 1 nach Einfüllen der ersten pastösen Masse a in die erste Kavität 5. Hier ist allerdings noch zusätzlich der Stützdorn 7 gezeigt, der sich innerhalb des flexiblen Kerns 3 befindet.

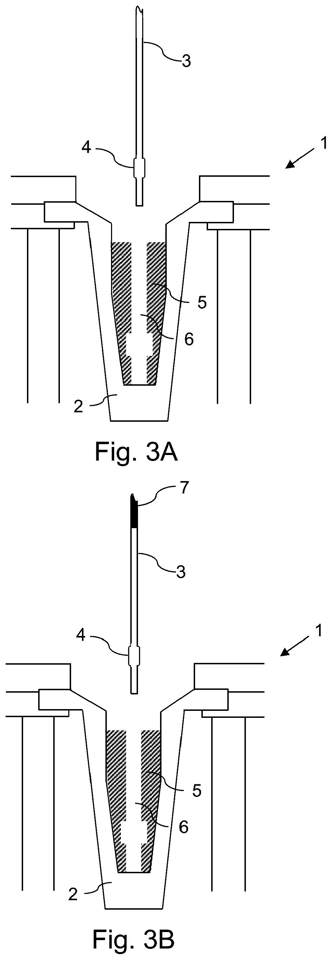

In Figur 3A wird die Vorrichtung 1 nach Bewegen des flexiblen Kerns 3 in eine zweite Position schematisch dargestellt. Der flexible Kern 3 hat, beispielweise durch Beaufschlagung mit einem negativen Druck oder durch Absaugen der eingefüllten Flüssigkeit, sein Volumen verkleinert, so dass der flexible Kern 3 nach oben bewegt werden konnte, ohne die erstarrte erste pastöse Masse a in der ersten Kavität 5 zu beschädigen. Der in die zweite Position bewegte flexible Kern 3 hinterlässt eine zweite Kavität 6, die dem äußeren Volumen des flexiblen Kerns 3 bei Befüllen der ersten Kavität 5 mit der ersten pastösen Masse a entspricht. Es kann auch gesagt werden, dass die zweite Kavität 6 die Form des flexiblen Kerns 3 hat.

In Figur 3B ist gezeigt, dass der Stützdorn 7 aus dem flexiblen Kern 3 zurückgezogen werden kann. Im zurückgezogenen Zustand des Stützdorns 7 wird ein Innenvolumen des flexiblen Kerns 3 frei, welches vorher durch den Stützdorn 7 ausgefüllt war. Hierdurch kann der flexible Kern 3 sich frei verformen und kann aus der ersten pastösen Masse a gezogen werden, ohne diese zu beschädigen. Es ist auch denkbar, dass die Verformung des flexiblen Kerns 3 noch dadurch unterstützt wird, dass sich im Stützdorn 7 eine Öffnung befindet, mit der ein negativer Druck in dem freigewordenen Volumen des flexiblen Kerns 3 angelegt werden kann, so dass sich dieser zusammenzieht.

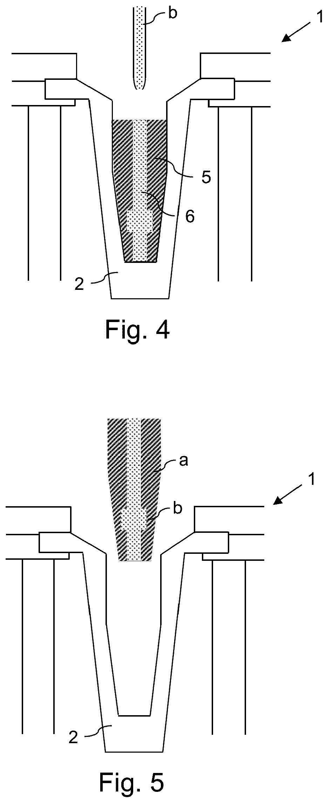

In Figur 4 wird die Vorrichtung 1 nach Einfüllen der zweiten pastösen Masse b in die zweite Kavität 6 gezeigt. Hierbei füllt die zweite pastöse Masse b die zweite Kavität 6 voll aus, auch die Einprägung des Musters 4 in die erstarrte erste pastöse Masse a. In anderen Worten, die erstarrte zweite pastöse Masse b weist eine Volumenformung auf, die dem äußeren Volumen des flexiblen Kerns 3 bei Befüllen der ersten Kavität 5 mit der ersten pastösen Masse a entspricht, wie in Figur 2 gezeigt. Nach Abkühlen der pastösen Massen a, b entsteht ein Verbund aus den zwei erstarrten pastösen Massen a, b. Ist dabei die erste pastöse Masse a zumindest teilweise transparent, erscheint das Muster 4 somit von außen als sichtbar, ist aber in einer tieferen Schicht der Lippenstiftmine eingebettet. Das Einfüllen der zweiten pastösen Masse kann bereits erfolgen, sobald die erste pastöse Masse zumindest teilweise erstarrt ist. Eine vollständige Erstarrung der ersten pastösen Masse muss nicht abgewartet werden, um das Einfüllen der zweiten pastösen Masse zu beginnen. Hierdurch wird eine erhöhte Fabrikationsgeschwindigkeit des Verbundes aus erster und zweiter pastöser Masse erreicht. Auch kann es vorteilhaft sein, wenn die erste pastöse Masse noch nicht vollständig erstarrt ist, die zweite pastöse Masse einzufüllen, um einen entsprechenden Verbund der pastösen Masse zu generieren.

Schließlich zeigt Figur 5 die Vorrichtung 1 nach Entformen der pastösen Massen a, b aus der flexiblen Form 2. Um den Verbund aus den erstarrten pastösen Massen a, b möglichst beschädigungsfrei aus der flexiblen Form 2 zu entnehmen, kann das Entformen durch ein exakt vertikales zurückziehen, ohne horizontale Verschiebung, erfolgen.

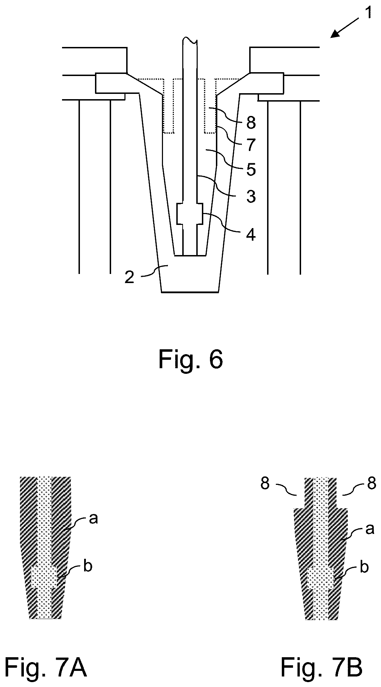

Figur 6 zeigt die einen Schnitt durch die Vorrichtung 1 vor Einfüllen der pastösen Massen mit einem aufgesetztem Reduzierstück 7, wie oben beschrieben. Die Abmessungen des Reduzierstücks 7 sind in Figur 6 als gestrichelte Linien eingezeichnet, um besser von den Abmessungen der flexiblen Form 2 unterschieden werden zu können. Das Reduzierstück 7 schließt entlang einer Kontaktfläche mit der flexiblen Form 2 bündig ab. Dabei definiert das Reduzierstück 7 Aussparungen 8 in der ersten Kavität 5, welche mit einer ersten pastösen Masse befüllt wird. Das Reduzierstück 7 kann dieselbe Symmetrie aufweisen wie die flexible Form 2. Ist beispielweise die flexible Form 2 rotations-symmetrisch um die vertikale Achse durch das Zentrum des flexiblen Kerns 3, so kann auch das Reduzierstück 7 rotations-symmetrisch um diese Achse sein. In diesem Falle sind auch die Aussparungen 8 rotations-symmetrisch um die vertikale Achse. Das Reduzierstück 7 kann so ausgestaltet sein, dass es bis zu einem Drittel der Längserstreckung der flexiblen Form 2 entspricht und einen Außendurchmesser aufweist, der in etwa dem Innendurchmesser der flexiblen Form 2 entspricht. Wenn die flexible Form 2 einen ringförmigen Querschnitt hat, so kann auch das Reduzierstück 7, zumindest der Teil, der in die flexible Form 2 eingeführt ist, ebenfalls einen ringförmigen Querschnitt aufweisen. Das Reduzierstück 7 verringert somit den Durchmesser der flexiblen Form 2, was zu einer Verringerung der Kavität führt, die mit der ersten pastösen Masse a aufgefüllt werden kann.

Figur 7 zeigt die entformten pastösen Massen nach Entformung aus einer erfindungsgemäßen Vorrichtung ohne Reduzierstück (Figur 7A) und mit Reduzierstück (Figur 7B). Das in Figur 6 angedeutete Reduzierstück hinterlässt in der erstarrten ersten pastösen Masse a die Aussparungen 8, wie in Figur 7B ersichtlich. Die Ausdehnung und Form dieser Aussparungen 8 ist komplementär zur Form des Reduzierstücks 7. Die Aussparungen 8 können in ihren Abmessungen und Form beispielsweise den Abmessungen einer Aufnahmevorrichtung (Körbchen) einer Lippenstiftmechanik entsprechen. Zudem ist es möglich, dass die Aussparungen 8 selbst mit einer zusätzlichen pastösen Masse befüllt werden.

## Patentansprüche

1. Eine Vorrichtung (1) zum Formen eines kosmetischen Produkts, insbesondere einer Lippenstiftmine, bestehend aus zumindest zwei pastösen Massen (a, b), die Vorrichtung (1) aufweisend:
eine flexible Form (2);
einen flexiblen Kern (3), angepasst in die flexible Form (2) bewegt zu werden und in einer ersten Position zumindest teilweise in der flexiblen Form (2) angeordnet zu sein und in einer zweiten Position außerhalb der flexiblen Form (2) angeordnet zu sein, wobei der flexible Kern (3) innen hohl ist; und
einen starren Dorn (7), angepasst zumindest teilweise in den flexiblen Kern (3) bewegt zu werden.

2. Die Vorrichtung (1) nach Anspruch 1, wobei der flexible Kern (3) angepasst ist, mit einem Druck oder Vakuum beaufschlagt zu werden, wobei der flexible Kern (3) sich bei Beaufschlagung mit Druck ausdehnt und bei Beaufschlagung mit Vakuum zusammenzieht.

3. Die Vorrichtung (1) nach einem der vorgehenden Ansprüche, wobei der flexible Kern (3) ein Muster (4) auf einer Außenwand aufweist, wobei das Muster (4) durch zumindest eine Vertiefung in dem flexiblen Kern (3) und/oder durch zumindest einen Vorsprung gebildet wird.

4. Die Vorrichtung (1) nach einem der vorhergehenden Ansprüche, wobei der flexible Kern (3) in der ersten Position zumindest an einer Stelle die flexible Form (2) berührt.

5. Die Vorrichtung (1) nach einem der vorhergehenden Ansprüche, wobei der flexible Kern (3) geformt ist aus einem Elastomer, der über den starren Dorn (7) geschoben ist, und wobei der starre Dorn (7) aus Metall oder Kunststoff besteht.

6. Die Vorrichtung (1) nach Anspruch 5, wobei sich zwischen dem starren Dorn (7) und dem flexiblen Kern (3) ein Ringspalt befindet.

7. Die Vorrichtung (1) nach einem der vorgehenden Ansprüche, weiter aufweisend:
ein Mittel zum Bewegen des flexiblen Kerns (3) in die erste und zweite Position.

8. Die Vorrichtung (1) nach einem der vorgehenden Ansprüche, weiter aufweisend:
ein Mittel zum Einfüllen einer ersten pastösen Masse (a) in eine erste Kavität (5), wobei die erste Kavität (5) zwischen der flexiblen Form (2) und
dem flexiblen Kern (3) gebildet wird, wenn der flexible Kern (3) in der ersten Position ist.

9. Die Vorrichtung (1) nach Anspruch 8, weiter aufweisend:
ein Mittel zum Einfüllen einer zweiten pastösen Masse (b) in eine zweite Kavität (6), wobei die zweite Kavität (6) in der ersten pastösen Masse (a) gebildet ist, wenn der flexible Kern (3) in der zweiten Position ist.

10. Die Vorrichtung (1) nach einem der vorhergehenden Ansprüche, weiter aufweisend:
ein Mittel zum Entformen der pastösen Massen (a, b).

11. Die Vorrichtung (1) nach einem der vorhergehenden Ansprüche, beinhaltend eine Grundplatte mit geometrischen Merkmalen, die eine Zentrierung und Fixierung des flexiblen Kerns (3) ermöglichen.

12. Ein Verfahren zum Formen eines kosmetischen Produkts, insbesondere einer Lippenstiftmine, bestehend aus zumindest zwei pastösen Massen (a, b), das Verfahren aufweisend:
Bewegen eines flexiblen Kerns (3), der innen hohl ist, in eine erste Position, wobei der flexible Kern (3) in der ersten Position zumindest teilweise in einer flexiblen Form (2) angeordnet ist und ein starrer Dorn (7) zumindest teilweise in dem flexiblen Kern (3) bewegbar aufgenommen ist;
Einfüllen einer ersten pastösen Masse (a) in eine erste Kavität (5), wobei die erste Kavität (5) zwischen der flexiblen Form (2) und dem flexiblen Kern (3) gebildet wird, wenn der flexible Kern (3) in der ersten Position ist;
Bewegen des flexiblen Kerns (3) in eine zweite Position, wobei der flexible Kern (3) in der zweiten Position außerhalb der flexiblen Form (2) angeordnet ist;
Einfüllen einer zweiten pastösen Masse (b) in eine zweite Kavität (6), wobei die zweite Kavität (6) in der ersten pastösen Masse (a) gebildet ist, wenn der flexible Kern (3) in die zweite Position bewegt ist; und
Entformen der pastösen Massen (a, b) aus der flexiblen Form (2).

13. Das Verfahren nach Anspruch 12, weiter aufweisend:
Beaufschlagen des flexiblen Kerns (3) mit Druck vor dem Einfüllen der ersten pastösen Masse (a); und
Beaufschlagen des flexiblen Kerns (3) mit Vakuum, vor dem Bewegen in die zweite Position.

14. Das Verfahren nach Anspruch 12, weiter aufweisend:
Zurückziehen des starren Dorns (7) nach dem Einfüllen der ersten pastösen Masse (a) in die erste Kavität (5) und Erstarren der ersten pastösen Masse (a).

## Claims

1. An apparatus (1) for forming a cosmetic product, in particular a lipstick mine, consisting of at least two pasty masses (a, b), the apparatus (1) comprising:
a flexible mold (2);
a flexible core (3) adapted to be moved into the flexible mold (2) and to be arranged in a first position at least partially inside the flexible mold (2) and to be arranged in a second position outside the flexible mold (2), wherein the flexible core (3) is hollow; and
a rigid mandrel (7) adapted to be moved at least partially into the flexible core (3).

2. The apparatus (1) according to claim 1, wherein the flexible core (3) is adapted to be subjected to positive pressure or negative pressure, wherein the flexible core (3) expands when subjected to positive pressure and contracts when subjected to negative pressure.

3. The apparatus (1) according to any of the preceding claims, wherein the flexible core (3) comprises a pattern (4) on an outer wall, wherein the pattern (4) is formed by at least one recess in the flexible core (3) and/or by at least one protrusion.

4. The apparatus (1) according to any of the preceding claims, wherein the flexible core (3) in the first position contacts the flexible mold (2) at least at one location.

5. The apparatus (1) according to any of the preceding claims, wherein the flexible core (3) is formed of an elastomer that is slid over the rigid mandrel (7), and wherein the rigid mandrel (7) consists of metal or plastic.

6. The apparatus (1) according to claim 5, wherein an annular gap is located between the rigid mandrel (7) and the flexible core (3).

7. The apparatus (1) according to any of the preceding claims, further comprising:
means for moving the flexible core (3) into the first and second positions.

8. The apparatus (1) according to any of the preceding claims, further comprising:
means for filling a first pasty mass (a) into a first cavity (5), wherein the first cavity (5) is formed between the flexible mold (2) and the flexible core (3) when the flexible core (3) is in the first position.

9. The apparatus (1) according to claim 8, further comprising:
means for filling a second pasty mass (b) into a second cavity (6), wherein the second cavity (6) is formed in the first pasty mass (a) when the flexible core (3) is in the second position.

10. The apparatus (1) according to any of the preceding claims, further comprising:
means for deforming the pasty masses (a, b).

11. The apparatus (1) according to any of the preceding claims, including a base plate with geometric features that allow centering and fixing of the flexible core (3).

12. A method for forming a cosmetic product, in particular a lipstick mine, consisting of at least two pasty masses (a, b), the method comprising:
moving a flexible core (3), which is hollow, into a first position, wherein the flexible core (3) in the first position is at least partially arranged inside a flexible mold (2) and wherein a rigid mandrel (7) is movably received at least partially in the flexible core (3);
filling a first pasty mass (a) into a first cavity (5), wherein the first cavity (5) is formed between the flexible mold (2) and the flexible core (3) when the flexible core (3) is in the first position;
moving the flexible core (3) into a second position, wherein the flexible core (3) in the second position is arranged outside the flexible mold (2);
filling a second pasty mass (b) into a second cavity (6), wherein the second cavity (6) is formed in the first pasty mass (a) when the flexible core (3) is moved into the second position; and
deforming the pasty masses (a, b) from the flexible mold (2).

13. The method according to claim 12, further comprising:
applying positive pressure to the flexible core (3) before filling the first pasty mass (a); and
applying negative pressure to the flexible core (3) before moving it into the second position.

14. The method according to claim 12, further comprising:
retracting the rigid mandrel (7) after filling the first pasty mass (a) into the first cavity (5) and solidifying the first pasty mass (a).

## Revendications

1. Un dispositif (1) pour mouler un produit cosmétique, en particulier un raisin de bâton à lèvres, constitué d'au moins deux masses pâteuses (a, b), le dispositif (1) comportant :
un moule flexible (2) ;
un noyau flexible (3) apte à être introduit dans le moule flexible (2) et à être disposé, dans une première position, au moins en partie dans le moule flexible (2) et à être disposé, dans une seconde position, à l'extérieur du moule flexible (2), le noyau flexible (3) étant creux intérieurement ; et
une broche rigide (7) apte à être introduite au moins en partie dans le noyau flexible (3).

2. Le dispositif (1) selon la revendication 1, le noyau flexible (3) étant apte à être sollicité par une pression ou un vide, le noyau flexible (3) se dilatant en cas de sollicitation par une pression et se rétractant en cas de sollicitation par un vide.

3. Le dispositif (1) selon une des revendications précédentes, le noyau flexible (3) comportant un motif (4) sur une paroi extérieure, le motif (4) étant formé par au moins un creux dans le noyau flexible (3) et/ou par au moins une saillie.

4. Le dispositif (1) selon une des revendications précédentes, le noyau flexible (3) touchant, dans la première position, le moule flexible (2) au moins en un endroit.

5. Le dispositif (1) selon une des revendications précédentes, le noyau flexible (3) étant moulé dans un élastomère qui est emmanché sur la broche rigide (7), et la broche rigide (7) étant constituée de métal ou de matière synthétique.

6. Le dispositif (1) selon la revendication 5, un interstice annulaire se trouvant entre la broche rigide (7) et le noyau flexible (3).

7. Le dispositif (1) selon une des revendications précédentes, comprenant en outre :
un moyen pour déplacer le noyau flexible (3) vers la première et la seconde position.

8. Le dispositif (1) selon une des revendications précédentes, comprenant en outre :
un moyen pour verser une première masse pâteuse (a) dans une première cavité (5), la première cavité (5) étant formée entre le moule flexible (2) et le noyau flexible (3) lorsque le noyau flexible (3) est dans la première position.

9. Le dispositif (1) selon la revendication 8, comprenant en outre :
un moyen pour verser une seconde masse pâteuse (b) dans une seconde cavité (6), la seconde cavité (6) étant formée dans la première masse pâteuse (a) lorsque le noyau flexible (3) est dans la seconde position.

10. Le dispositif (1) selon une des revendications précédentes, comprenant en outre :
un moyen pour démouler les masses pâteuses (a, b).

11. Le dispositif (1) selon une des revendications précédentes, contenant une plaque de base avec des caractéristiques géométriques qui permettent un centrage et une immobilisation du noyau flexible (3).

12. Un procédé pour mouler un produit cosmétique, en particulier un raisin de bâton à lèvres, constitué d'au moins deux masses pâteuses (a, b), le procédé comprenant :
déplacer un noyau flexible (3), qui est creux intérieurement, vers une première position, le noyau flexible (3) étant disposé, dans la première position, au moins en partie dans le moule flexible (2), et une broche rigide (7) étant au moins en partie reçue de manière déplaçable dans le noyau flexible (3) ;
verser une première masse pâteuse (a) dans une première cavité (5), la première cavité (5) étant formée entre le moule flexible (2) et le noyau flexible (3) lorsque le noyau flexible (3) est dans la première position ;
déplacer le noyau flexible (3) vers une seconde position, le noyau flexible (3) étant disposé, dans la seconde position, à l'extérieur du moule flexible (2) ;
verser une seconde masse pâteuse (b) dans une seconde cavité (6), la seconde cavité (6) étant formée dans la première masse pâteuse (a) lorsque le noyau flexible (3) est déplacé vers la seconde position ; et
démouler les masses pâteuses (a, b) du moule flexible (2) .

13. Le procédé selon la revendication 12, comprenant en outre :
solliciter le noyau flexible (3) par une pression avant de verser la première masse pâteuse (a) ; et
solliciter le noyau flexible (3) par un vide avant de le déplacer vers la seconde position.

14. Le procédé selon la revendication 12, comprenant en outre :
retirer la broche rigide (7) après que la première masse pâteuse (a) a été versée dans la première cavité (5) et que la première masse pâteuse (a) s'est solidifiée.
